# FASCICULE DE BREVET EUROPEEN

(11) **EP 2 469 021 B1**
(45) Date de publication et mention de la délivrance du brevet: **07.07.2021**
(21) Numéro de dépôt: 11290536.9
(22) Date de dépôt: 24.11.2011
(51) Int. Cl.: E21B 49/00

(54) **Méthode pour construire un modèle d'écoulement associé à des courbes de pression capillaire et/ou des courbes de perméabilité relative**
Methode zum Erstellen eines Strömungsmodells, das mit Kapillardruckkurven und/oder Kurven relativer Permeabilität verbunden ist
Method for building a flow model associated with capillary pressure curves and/or relative permeability curves

(30) Priorité: 03.12.2010 FR 1004710
(43) Date de publication de la demande: 27.06.2012
(73) Titulaire: IFP Energies nouvelles, 92500 Rueil-Malmaison (FR)
(72) Inventeur: Fournier, Frédérique, 95240 Cormeilles-en-Parisis (FR)
(74) Mandataire: IFP Energies nouvelles

(56) Documents cités:
- US-B1- 6 230 101
- LEE SANG HEON ET AL: "Electrofacies characterization and permeability predictions in carbonate reservoirs: Role of multivariate analysis and nonparametric regression", PROCEEDINGS - SPE ANNUAL TECHNICAL CONFERENCE AND EXHIBITION 1999, 3 octobre 1999 (1999-10-03), - 6 octobre 1999 (1999-10-06), pages 1-13, XP002658543, SOC PET ENG (SPE)
- RIDHA B.C GHARBI: "Use of reservoir simulation for optimizing recovery performance", JOURNAL OF PETROLEUM SCIENCE AND ENGINEERING, vol. 42, no. 2-4, 1 April 2004 (2004-04-01), pages 183-194, XP055209494, ISSN: 0920-4105, DOI: 10.1016/j.petrol.2003.12.010
- PHILIPPE DUPOUY, JOHN W. BARKER, JEAN-PAUL VALOIS: "Grouping Pseudo Relative Permeability Curves", IN SITU, vol. 22, no. 1, 1998, pages 1-33, XP008177267,

## Description

La présente invention concerne le domaine technique de l'exploitation de réservoirs souterrains, tels que des réservoirs pétroliers, des sites de stockage de gaz ou des nappes souterraines.

En particulier, l'invention permet la construction de modèles de réservoir utilisés pour la simulation des écoulements de fluide (hydrocarbures, eau, CO2,...) dans les réservoirs souterrains, et permettre in fine, une prévision de la production ou de l'injection, et une optimisation de la gestion de ces réservoirs souterrains.

L'optimisation et l'exploitation des gisements pétroliers par exemple, reposent sur une description aussi précise que possible de la structure, des propriétés pétrophysiques, des propriétés des fluides, etc., du gisement étudié. Pour ce faire, les spécialistes utilisent un outil qui permet de rendre compte de ces aspects de façon approchée : le modèle d'écoulement. Un tel modèle constitue une maquette du sous-sol, représentative à la fois de sa structure et de son comportement. Généralement, ce type de maquette est représenté sur un ordinateur, et l'on parle alors de modèle numérique. Un modèle d'écoulement comporte une grille (ou maillage), généralement tridimensionnelle, associée à une ou plusieurs propriétés pétrophysiques (porosité, perméabilité, saturation, lithologie,...). L'association consiste à attribuer des valeurs de ces propriétés pétrophysiques à chacune des mailles de la grille.

Ces modèles bien connus et largement utilisés dans l'industrie pétrolière, permettent de déterminer de nombreux paramètres techniques relatifs à l'étude ou l'exploitation d'un réservoir, d'hydrocarbures par exemple. En effet, puisque le modèle d'écoulement est représentatif de la structure du réservoir et de son comportement, l'ingénieur l'utilise par exemple pour déterminer les zones qui ont le plus de chances de contenir des hydrocarbures, les zones dans lesquelles il peut être intéressant/nécessaire de forer un puits d'injection ou de production pour améliorer la récupération des hydrocarbures, le type d'outils à utiliser, les propriétés des fluides utilisés et récupérés.... Ces interprétations de modèles d'écoulement en termes de «paramètres techniques d'exploitation» sont bien connues des spécialistes. De la même façon, la modélisation des sites de stockages de CO₂ permet de surveiller ces sites, de détecter des comportements anormaux et de prédire le déplacement du CO₂ injecté.

De façon générale, le modèle d'écoulement est construit en s'appuyant sur une description géologique fine des couches sédimentaires constituant le réservoir. Cette description géologique consiste à renseigner chaque maille en termes de lithologies. On appelle lithologies les différents types de roches présentes au sein du réservoir, tels que des grès, des grès argileux, des dolomies. Il peut s'agir de faciès lithologiques et sédimentaires.

Une fois le modèle décrit en termes de lithologies, les propriétés pétrophysiques, nécessaires aux simulations d'écoulement, sont alors attribuées en fonction de ces lithologies. Une lithologie spécifique aura de façon spécifique une distribution de porosité, une distribution de perméabilité particulières, ainsi que des saturations, perméabilités relatives, pressions capillaires, etc. Ces propriétés pétrophysiques résultent généralement de mesures au laboratoire, sur des échantillons de roches prélevés au sein du réservoir (déblais de forage, carottes).

Un autre type de propriétés pétrophysiques nécessaire aux simulations d'écoulement concerne les courbes de pression capillaire et les courbes de perméabilité relative. Dans ce cas également, l'attribution de ces propriétés physiques aux cellules du modèle d'écoulement se fait en lien étroit avec les faciès lithologiques et sédimentaires rencontrés sur les mailles correspondantes. Cette attribution se fait aussi à partir des mesures expérimentales faites au laboratoire sur des échantillons de roches prélevés au sein du réservoir. Les mesures expérimentales conduisent en particulier à un ensemble de données concernant les courbes de pression capillaire et de perméabilité relative.

Pour associer de tels courbes à des lithologies spécifiques, l'usage consiste à les trier manuellement, en les observant visuellement, afin d'étudier la possibilité de définir des courbes types, c'est-à-dire des courbes modèles qui représenteraient par exemple le comportement type d'une lithologie donnée. Lorsque cette analyse est achevée, qu'il a été possible de classer les courbes expérimentales mesurées au laboratoire, et de définir des courbes types pour les différentes lithologies présentes au sein du réservoir, on dit alors que les lithologies sont associées à des « rock-types » caractérisés par un comportement pétrophysique bien spécifique, en particulier en terme de saturations, pressions capillaires et perméabilités relatives.

Cependant, cette comparaison visuelle permettant de classifier les courbes de pression capillaire et/ou de perméabilité relative, devient très vite difficile lorsque les mesures expérimentales sont très abondantes. Si plusieurs dizaines de courbes expérimentales sont disponibles, voire plusieurs centaines, la classification manuelle est lourde à mettre en oeuvre, et aboutit à des résultats très subjectifs (liés à la personne qui conduit l'analyse) et très peu fondés sur des critères quantitatifs.

On peut citer le document « Dupouy, P., Barker, J., Valois, J-P, Grouping pseudo relative permeability curves, In situ, vol. 22, No 1, pages 1-33, 1998 » qui concerne une méthode d'attribution d'une courbe de perméabilité relative à un groupe de mailles du modèle d'écoulement, après avoir préalablement rempli les mailles dudit modèle d'écoulement en courbes de perméabilité relative.

La présente invention concerne une méthode pour construire une représentation d'un gisement souterrain, dans lequel on discrétise le gisement en un ensemble de mailles, et on attribue de façon automatique à chacune des mailles, des courbes de pressions capillaire et/ou des courbes de perméabilités relatives. La méthode se base sur un traitement automatique des courbes, permettant d'établir des familles de courbes par l'analyse de leur morphologie.

### La méthode selon l'invention

L'invention est définie par la revendication indépendante 1. Les réalisations préférées sont définies par les revendications dépendantes. L'objet de l'invention concerne une méthode pour construire une représentation d'un gisement souterrain, à partir de courbes décrivant une évolution d'une saturation d'un fluide en fonction d'au moins une propriété *P* relative à l'écoulement dudit fluide au sein dudit gisement, dans lequel on discrétise ledit gisement en un ensemble de mailles. La méthode comporte les étapes suivantes :
- on réalise une analyse en composantes principales d'un tableau de données construit à partir desdites courbes, de façon à extraire des facteurs principaux expliquant lesdites données ;
- on représente lesdites courbes dans un espace de représentation construit à partir desdits facteurs principaux ;
- on réalise une classification des courbes représentées dans l'espace de représentation ;
- on définit au moins une courbe représentative de chaque classe issue de ladite classification ; et
- on associe à chaque maille une desdites courbes représentatives.

Selon l'invention, on peut construire le tableau de données en réalisant les étapes suivantes : on ré-échantillonne les courbes à un pas régulier et commun aux différentes courbes ; et on construit le tableau où chaque ligne correspond à une valeur de la propriété *P* obtenue après ré-échantillonnage, et où chaque colonne correspond à une valeur correspondante de la saturation observée sur les courbes ré-échantillonnées.

Selon l'invention, pour construire l'espace de représentation, on peut effectuer les étapes suivantes :
i- on détermine un nombre de facteurs principaux à conserver pour caractériser une morphologie desdites courbes ;
ii- on détermine un paramètre caractérisant lesdites courbes par rapport auxdits facteurs principaux conservés ;
iii- on définit des axes dudit espace de représentation par les valeurs dudit paramètre.

Le paramètre peut représenter une corrélation entre les courbes et les facteurs principaux conservés, ou une contribution des courbes auxdits facteurs conservés.

Selon l'invention, la classification peut au moyen d'un algorithme choisi parmi les méthodes suivantes : méthode « K-Means », méthode non supervisée par réseaux de neurone, méthode non supervisée par réseau de Kohonen, méthode de classification hiérarchique, méthode supervisée par analyse discriminante, méthode supervisée par réseau de neurone.

Les courbes représentatives d'une classe peuvent être définies par une moyenne calculée sur au moins deux courbes les plus proches d'un centre de gravité de la classe ; ou par une médiane des courbes de ladite classe ou sur une sélection desdites courbes de ladite classe, ou par rapport à un centre de gravité de la classe. Selon un mode de réalisation les courbes représentatives d'une classe sont définies après un filtrage sur les facteurs principaux utilisés dans la classification.

Enfin selon l'invention, on peut définir un schéma d'exploitation optimal du gisement à partir de la représentation du gisement et au moyen d'un simulateur d'écoulement ; et l'on peut alors exploiter le gisement selon le schéma d'exploitation optimal.

D'autres caractéristiques et avantages de la méthode selon l'invention, apparaîtront à la lecture de la description ci-après d'exemples non limitatifs de réalisations, en se référant aux figures annexées et décrites ci-après.

### Présentation succincte des figures

- La figure 1 illustre les étapes de la méthode selon l'invention
- La figure 2 présente des exemples de courbes de pression capillaire : l'axe horizontal correspond à la saturation en mercure (SHg) qui a été injectée dans le volume poreux de l'échantillon analysé, et l'axe vertical montre la pression d'injection de mercure (PHg) correspondante.

- La figure 3 représente des courbes de pression capillaire faisant partie de l'ensemble des courbes traitées dans l'exemple spécifique choisi pour illustrer l'invention.
- Les figures 4a, 4b, et 4c montrent la projection des courbes de pression capillaire dans un espace de représentation multivarié.
- La figure 5 présente quelques exemples de courbes de pression capillaire pour chacune des six familles définies à partir de la classification, illustrant ainsi qu'au sein d'une même famille, les courbes ont des formes similaires.

### Description détaillée de la méthode

La méthode de la présente invention est décrite en s'appuyant sur un exemple de réalisation où les courbes à analyser sont des courbes de pression capillaire. La méthode est applicable également au traitement des courbes de perméabilité relative, ou bien au traitement simultané des courbes de perméabilité relative et de pression capillaire.

On rappelle qu'une courbe de pression capillaire est une courbe représentant la pression capillaire en fonction de la saturation, et qu'une courbe de perméabilité relative est une courbe représentant la perméabilité relative en fonction de la saturation.

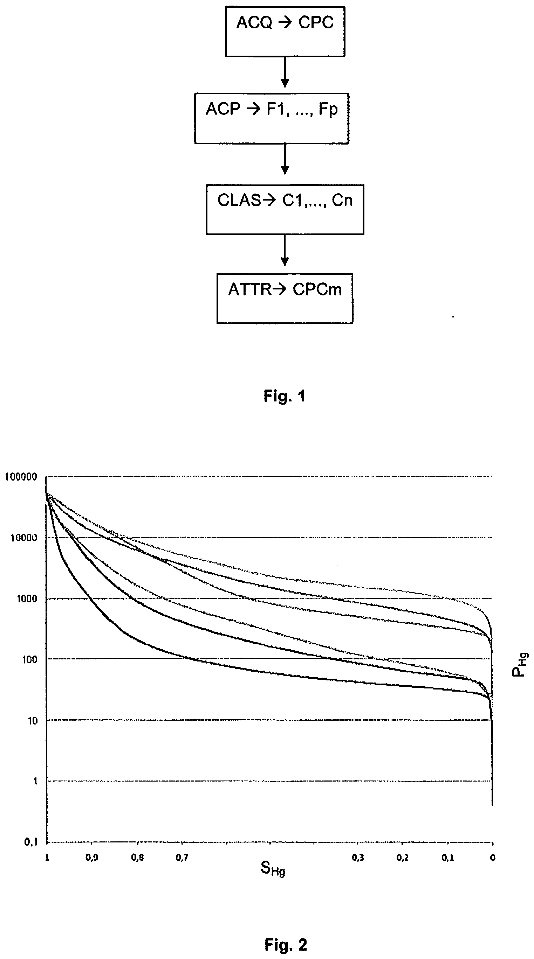

La figure 1 illustre les étapes de la méthode selon l'invention, permettant de construire une représentation d'un gisement souterrain à partir d'une discrétisation du gisement en un ensemble de mailles, chaque maille étant associée à une valeur de lithologie :
1. Acquisition (ACQ) de courbes de pression capillaire (CPC)
2. Analyse en composantes principales (ACP) des courbes de pression capillaire
3. Classification (CLAS) des courbes de pression capillaire
4. Attribution (ATTR) d'une courbe de pression capillaire en chaque maille

### 1. Acquisition de courbes de pression capillaire

L'acquisition de courbes décrivant une évolution d'une saturation d'un fluide en fonction d'au moins une propriété (pression capillaire, perméabilités relatives) relative à l'écoulement de ce fluide au sein d'un gisement est bien connu des spécialistes.

Ces expériences de laboratoires sont réalisées sur des échantillons extraits du gisement. On détermine par exemple des courbes de pression capillaire et de perméabilités relatives. Les courbes de pression capillaire et/ou de perméabilité relative peuvent être traitées, quelque soit la méthode expérimentale utilisée pour les obtenir.

Dans l'exemple de réalisation spécifique, il s'agit d'analyser un ensemble de 110 courbes de pression capillaire obtenues au laboratoire par la méthode d'injection de mercure, sur des échantillons de roche d'un réservoir pétrolier correspondant à différentes lithologies. Les courbes correspondent à des couples de mesures (saturation en mercure, pression d'injection du mercure). Il est connu de transformer ces courbes en courbe de saturation en eau / pression capillaire ou saturation en huile / pression capillaire. Ceci, afin de s'affranchir des effets de fluides différents, préalablement à l'analyse des formes de courbes.

La figure 2 présente des exemples de courbes de pression capillaire : l'axe horizontal correspond à la saturation en mercure (SHg) qui a été injectée dans le volume poreux de l'échantillon analysé, et l'axe vertical montre la pression d'injection de mercure (PHg) correspondante. Six courbes sont représentées sur la figure 2, correspondant à six échantillons différents qui ont été analysés. On observe que la forme de la courbe de pression capillaire varie d'un échantillon à l'autre, cette variation étant en relation avec la capacité de mobilité relative des fluides (mercure vs. air) à l'intérieur des pores de la roche réservoir.

### 2. Analyse en composantes principales des courbes de pression capillaire

Cette étape consiste à réaliser une analyse en composantes principales sur un tableau de données constitué à partir des courbes de pression capillaire.

On rappelle que l'Analyse en Composantes Principales (ACP) est une méthode de la famille de l'analyse des données et plus généralement de la statistique multivariée. L'ACP consiste à transformer des variables liées entre elles (dites "corrélées" en statistique) en nouvelles variables indépendantes (au sens linéaire) les unes des autres (donc "non linéairement corrélées"). Ces nouvelles variables sont nommées facteurs (ou axes). Ces nouvelles variables sont des combinaisons linéaires des variables originales. Cette technique permet de réduire l'information en un nombre de variables plus limité que le nombre initial.

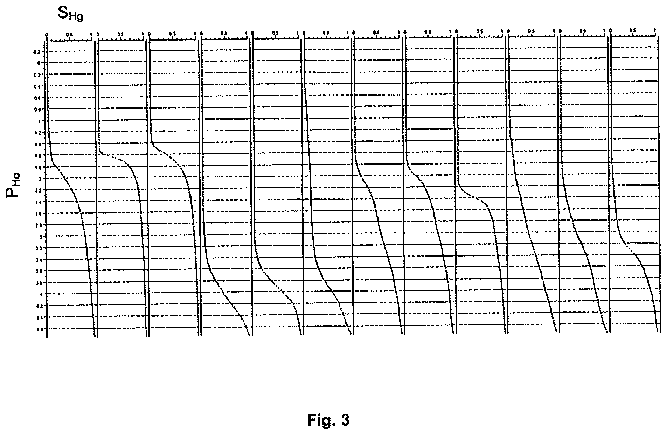

Pour appliquer cette technique dans le cadre de notre invention, il est nécessaire de définir les variables pour lesquelles on dispose de plusieurs observations. Pour ce faire, selon l'invention, les courbes de pression capillaire sont ré-échantillonnées à un pas de pression capillaire commun aux différentes courbes, afin que la saturation soit renseignée sur une grille régulière commune à toutes les courbes analysées. Quelques courbes de pression capillaire après ré-échantillonnage sont représentées sur la figure 3. On construit alors un tableau où les lignes sont les valeurs régulières obtenues après ré-échantillonnage de la pression capillaire, et les colonnes les valeurs correspondantes de la saturation observées sur les différentes courbes. Dans l'exemple spécifique, ce tableau possède 110 colonnes, puisqu'il y a 110 courbes de pression capillaire à analyser, et 129 lignes, correspondant aux 129 valeurs régulièrement échantillonnées de la pression capillaire.

On définit alors les lignes comme les observations (ou individus statistiques), c'est-à-dire que les observations sont les valeurs régulières (obtenues après ré-échantillonnage) de pression capillaire. Et on définit les colonnes comme les variables, c'est-à-dire que les variables sont les valeurs correspondantes de la saturation observées sur les différentes courbes.

Une analyse en composantes principales est alors appliquée à ce tableau, sur ces 110 variables, permettant d'extraire des facteurs principaux (F .., Fp). Selon un mode de réalisation, et selon l'exemple spécifique, le tableau est normalisé, c'est-à-dire que les valeurs propres et vecteurs propres extraits par l'analyse en composantes principales sont extraits de la matrice des corrélations entre les variables. Le tableau 1 présente les premières valeurs propres extraites de l'analyse en composantes principales appliquée sur l'ensemble de courbes traitées dans l'exemple illustratif, et associées à l'information contenue dans les facteurs qui sont calculés :

| *Valeur propre λᵢ* | *Information portée par le facteur i* | *Information cumulée par les i premiers facteurs* |
|---|---|---|
| 89.90 | 0.8172 | 0.8172 |
| 15.55 | 0.1414 | 0.9586 |
| 2.64 | 0.0240 | 0.9827 |
| 1.10 | 0.0100 | 0.9927 |
| 0.37 | 0.0033 | 0.9960 |
| 0.18 | 0.0016 | 0.9976 |

On observe que l'importance des facteurs décroît avec leur rang, comme il se doit dans l'analyse en composantes principales. Ainsi le premier facteur contient 81.72% de l'information initialement contenue dans le tableau des données, le deuxième n'en contient plus que 14.14%, le troisième 2.40% et ainsi de suite.

Selon un mode de réalisation, les valeurs de pression capillaire ou celles de perméabilité relative peuvent être transformées avant leur traitement par analyse en composante principale. On peut par exemple remplacer les valeurs de pression capillaire par le logarithme décimal de la pression capillaire, ou par la transformation de Leverett. Cette dernière transformation permet par exemple de changer la forme des courbes pour s'affranchir de l'effet dû à la taille des pores. Les courbes ainsi transformées deviennent alors principalement liées à la nature du réseau poreux. Une telle transformation permet ainsi une classification plus aisée.

Selon un mode de réalisation, l'analyse en composantes principales conduite sur le tableau des données construit à partir des courbes est menée sur la matrice de variance-covariance (et non plus sur la matrice des corrélations des variables).

### 3. Classification des courbes de pression capillaire

Cette étape consiste à classer les courbes de pression capillaire dans différentes classes (C1, ..., Cn).

Selon l'invention on construit dans un premier temps un espace de représentation des courbes de pression capillaire dans lequel s'effectue leur classification. Cet espace est engendré au moyen des résultats de l'Analyse en Composantes Principales. Pour ce faire :
i- on détermine un nombre de facteurs à conserver pour caractériser la morphologie des courbes de pression capillaire analysées. Ces facteurs sont appelés facteurs dominants. Chaque facteur explique une partie de la variabilité - la variance - des données. Dans l'exemple spécifique, il a été retenu les cinq premiers facteurs de l'analyse en composantes principales, qui représentent à eux cinq 99.60% de l'information totale contenue dans le tableau de données.
ii- on détermine un paramètre caractérisant les courbes de pression capillaire (variables initiales) par rapport aux différents facteurs extraits de l'analyse en composantes principales et retenus pour expliquer les données.
   Selon un mode de réalisation, on détermine les corrélations entre les courbes de pression capillaire (variables initiales) et les facteurs retenus après l'analyse en composantes principales.
   Selon un autre mode de réalisation, on détermine les contributions des courbes de pression capillaire (variables initiales) aux différents facteurs retenus après l'analyse en composantes principales.
iii- on engendre l'espace de représentation au moyen dudit paramètre. Cet espace est multidimensionnel et ses axes correspondent aux valeurs dudit paramètre. Ainsi, selon un exemple, ses axes correspondent aux valeurs des corrélations des courbes de pression capillaire (variables initiales) avec les facteurs retenus après l'analyse en composante principale.

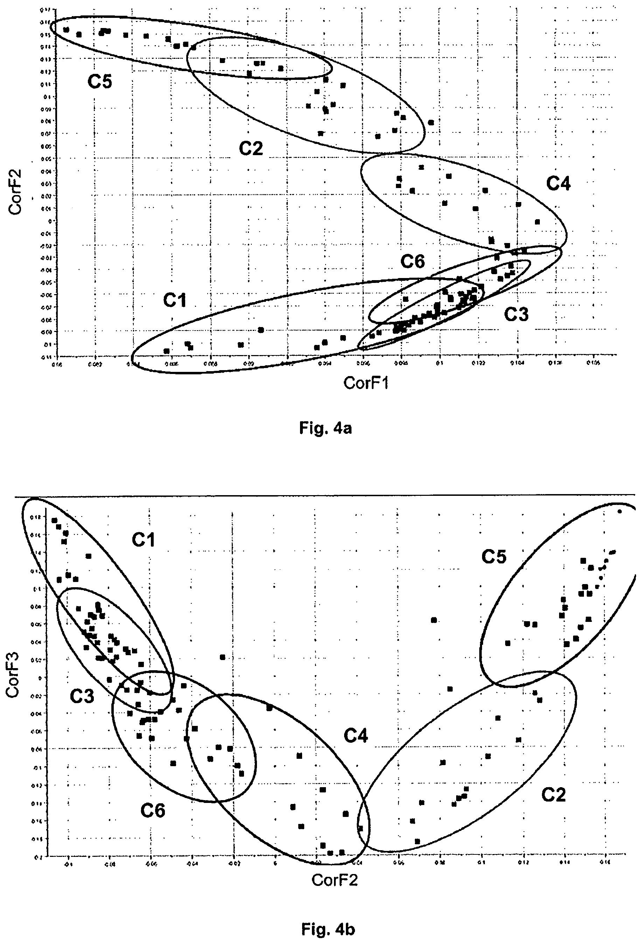

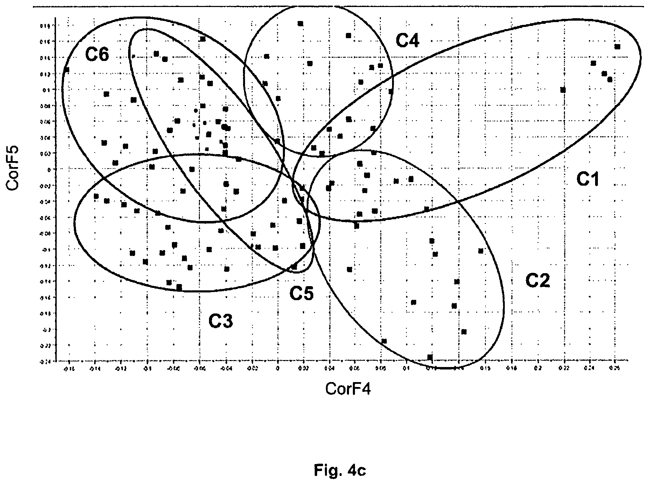

Dans l'exemple spécifique, il a été retenu les cinq premiers facteurs de l'analyse en composantes principales (99.60% de l'information). L'espace de représentation des courbes est alors un espace de dimension 5, dans lequel sont représentées les 110 courbes de pression capillaire étudiées. Différents plans de cet espace sont représentés sur les figures 4a, 4b et 4c. Ces figures montrent la projection des courbes de pression capillaire dans un espace de représentation multivarié dont les axes sont les valeurs des corrélations (CorF1, CorF2, CorF3, CorF4, CorF5) des courbes avec les facteurs (F1,...F5) de l'analyse en composantes principales. C'est dans cet espace qu'un algorithme de classification est mis en oeuvre pour définir automatiquement des familles de courbes de pression capillaire.

L'étape suivante est la classification des courbes de pression capillaire représentées dans l'espace de représentation, c'est-à-dire l'espace associé aux corrélations (paramètre) entre les courbes et les facteurs retenus après l'analyse en composantes principales.

On connaît de nombreuses techniques pour réaliser une classification d'objets dans un espace multidimensionnel. De préférence, on utilise un algorithme de classification automatique. On peut par exemple utiliser la méthode dite « K-Means ». Cette méthode est une méthode de classification automatique non supervisée fondée sur l'analyse des distances entre les points représentant les courbes de pression capillaire dans l'espace de représentation.

Dans l'exemple spécifique, six classes ont été formées avec cet algorithme. Chaque classe regroupe des points proches dans l'espace de représentation à 5 dimensions, c'est-à-dire des courbes de pression capillaire de forme similaire. Sur les figures 4a, 4b et 4c, les courbes de pression capillaire, correspondant aux points, sont codées en fonction des six classes (C1,... C6) qui ont été déterminées lors de cette étape.

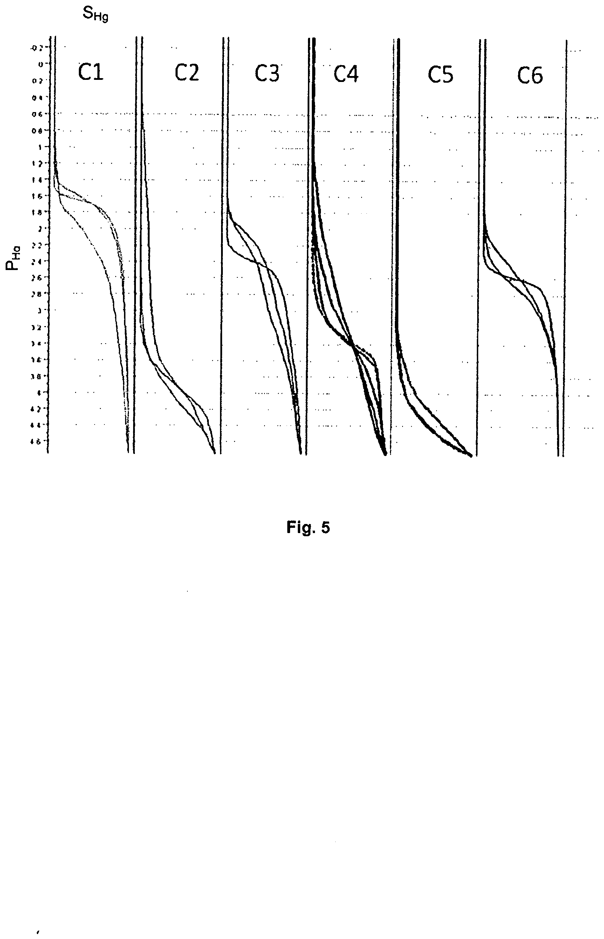

La figure 5 présente quelques exemples de courbes de pression capillaire pour chacune des six familles définies à partir de la classification, illustrant ainsi qu'au sein d'une même famille, les courbes ont des formes similaires.

Selon un autre mode de réalisation, on remplace la méthode K-Means par un algorithme choisi parmi les méthodes non supervisées (approche par réseaux de neurone, réseau de Kohonen, méthode de classification hiérarchique, etc.), ou parmi les méthodes supervisées (analyse discriminante, réseau de neurone supervisé, etc.).

### 4. Attribution d'une courbe de pression capillaire en chaque maille

Lors de cette dernière étape, on définit une ou des courbes de pression capillaire représentatives de chaque classe de courbes de pression capillaire. Ces courbes représentatives sont appelées "courbes modèles" (CPCm).

Selon un exemple, on définit les "courbes modèles" de chaque classe, par la moyenne calculée sur trois courbes « caractéristiques » qui sont représentées sur la figure 5. Ces courbes « caractéristiques » sont les trois courbes les plus proches du centre de gravité de la classe.

Selon un autre exemple, on définit les "courbes modèles" de chaque classe, par la médiane des courbes sur toute la classe ou sur une sélection des courbes les plus typiques de la famille. On peut également utiliser la moyenne ou la médiane des courbes, après leur filtrage sur les facteurs principaux utilisés dans la classification, ou encore le centre de gravité de la classe.

Ainsi, on associe à chaque classe de pression capillaire, une seule courbe de pression capillaire représentative, appelée "courbe modèle". Par cette association, on définit six types de roche (*"rock-types"*) en fonction de leur comportement spécifique en termes de pression capillaire.

Puis, on associe chaque classe ou chaque type de roche à une lithologie particulière. Pour ce faire, on peut par exemple utiliser une méthode de classification supervisée à l'étape précédente. Une telle méthode permet d'établir un lien direct entre les classes de courbes de pression capillaire et les lithologies. Elle permet ainsi une connexion immédiate entre lithologies et rock-types. Dans ce contexte, l'information d'apprentissage pour l'algorithme de classification supervisée est fournie par la lithologie des échantillons de roche sur lesquels les mesures expérimentales ont été faites (étape 1), et les classes de courbes sont ainsi «préformées» par les lithologies. Chaque famille de courbes détectée par l'algorithme de classification est mise en relation directe avec une lithologie spécifique du réservoir étudié.

Le modèle d'écoulement étant décrit en termes de lithologies, les "courbes modèles", comme les autres propriétés pétrophysiques, sont attribuées en fonction de ces lithologies. Une lithologie spécifique possède ainsi une courbe de pression capillaire spécifique (la "courbe modèle"). Le modèle d'écoulement est alors décrit en chaque maille par une courbe de pression capillaire.

### Avantages et utilisation

La présente invention comporte donc un traitement automatique des courbes de pression capillaire et/ou de perméabilité relative, lequel aboutit à la définition de différentes familles de courbes, chaque famille regroupant des courbes dont la forme est très proche, permettant ainsi de définir les courbes types en utilisant, par exemple, la courbe moyenne calculée sur une même famille.

Dans la définition des familles, il est aussi possible d'établir une connexion avec les lithologies, ce qui aboutit alors à la construction automatique de courbe représentative de chaque lithologie présente au sein du réservoir pétrolier, définissant des comportements pétrophysiques bien caractéristiques.

L'invention conduit à un gain d'efficience important, dès lors qu'il y a beaucoup de courbes, mais aussi à une définition beaucoup plus robuste des courbes types, puisqu'elle s'appuie sur des caractéristiques quantifiées de leur morphologie, et sur une méthode de tri quantifiée elle-aussi.

Cette méthode remplace une approche manuelle uniquement fondée sur des critères visuels, et de surcroît difficile à mettre en œuvre lorsque le nombre de courbes expérimentales disponibles est significatif.

A partir du modèle d'écoulement ainsi renseigné en termes de courbes de pression capillaire et/ou de perméabilité relative, les spécialistes peuvent réaliser un calage d'historique performant, et définir un schéma d'exploitation du gisement (emplacement des puits producteur, injecteur, dimensionnement des installations de production, ...). Pour ce faire, on réalise, au moyen d'un logiciel appelé "simulateur d'écoulement", des simulations d'écoulement d'hydrocarbures dans les réservoirs pétroliers, selon différents schémas. Ces simulations permettent d'établir les prévisions de production d'un réservoir pétrolier en fonction du scénario. On choisit alors le schéma permettant d'optimiser l'exploitation du réservoir (volume produit par exemple).

On exploite alors le gisement selon ce schéma d'exploitation.

## Revendications

1. Méthode d'exploitation d'un gisement souterrain, mise en oeuvre par un ordinateur, dans laquelle on construit une représentation dudit gisement souterrain, à partir de courbes décrivant une évolution d'une saturation d'un fluide en fonction d'au moins une propriété P relative à l'écoulement dudit fluide au sein dudit gisement, ladite propriété P étant la pression capillaire ou la perméabilité relative, lesdites courbes étant obtenues par des expériences de laboratoire réalisées sur des échantillons extraits dudit gisement, dans laquelle on discrétise ledit gisement en un ensemble de mailles, chaque maille dudit ensemble de mailles étant associée à une lithologie, la méthode comprenant les étapes suivantes:
- on réalise une analyse en composantes principales d'un tableau de données construit à partir desdites courbes, de façon à extraire des facteurs principaux expliquant lesdites données ;
- on représente lesdites courbes dans un espace de représentation construit à partir desdits facteurs principaux ;
- on réalise une classification des courbes représentées dans l'espace de représentation au moyen d'une méthode de classification supervisée, l'information d'apprentissage pour ladite méthode de classification supervisée correspondant à la lithologie desdits échantillons, chaque classe issue de ladite classification étant associée à une lithologie ;
- on définit au moins une courbe représentative de chaque classe issue de ladite classification ;
- on associe à chaque maille une desdites courbes représentatives en fonction de la lithologie associée à la maille ;
- on définit un schéma d'exploitation optimal dudit gisement à partir de ladite représentation dudit gisement et au moyen d'un simulateur d'écoulement ; et
- on exploite ledit gisement selon ledit schéma d'exploitation optimal.

2. Méthode selon la revendication 1, dans laquelle on construit ledit tableau de données en réalisant les étapes suivantes :
- on ré-échantillonne lesdites courbes à un pas régulier et commun aux différentes courbes ;
- on construit ledit tableau où chaque ligne correspond à une valeur de ladite propriété *P* obtenue après ré-échantillonnage, et où chaque colonne correspond à une valeur correspondante de la saturation observée sur lesdites courbes ré-échantillonnées.

3. Méthode selon la revendication 2, dans laquelle on réalise l'analyse en composantes principales, en utilisant les colonnes en tant que variables, et les lignes en tant qu'observations.

4. Méthode selon l'une des revendications précédentes, dans laquelle ladite propriété relative à l'écoulement dudit fluide est la pression capillaire ou la perméabilité relative ou une transformation de Leverett de la pression capillaire ou de la perméabilité relative.

5. Méthode selon l'une des revendications précédentes, dans laquelle on construit ledit espace de représentation au moyen des étapes suivantes :
i- on détermine un nombre de facteurs principaux à conserver pour caractériser une morphologie desdites courbes ;
ii- on détermine un paramètre caractérisant lesdites courbes par rapport auxdits facteurs principaux conservés ;
iii- on définit des axes dudit espace de représentation par les valeurs dudit paramètre.

6. Méthode selon la revendication 5, dans laquelle ledit paramètre représente une corrélation entre lesdites courbes et les facteurs principaux conservés, ou une contribution desdites courbes auxdits facteurs principaux conservés.

7. Méthode selon l'une des revendications précédentes, dans laquelle on réalise ladite classification au moyen d'un algorithme choisi parmi les méthodes suivantes : méthode « K-Means », méthode non supervisée par réseaux de neurone, méthode non supervisée par réseau de Kohonen, méthode de classification hiérarchique, méthode supervisée par analyse discriminante, méthode supervisée par réseau de neurone.

8. Méthode selon l'une des revendications précédentes, dans laquelle lesdites courbes représentatives d'une classe sont définies par une moyenne calculée sur au moins deux courbes les plus proches d'un centre de gravité de la classe.

9. Méthode selon l'une des revendications 1 à 7, dans laquelle lesdites courbes représentatives d'une classe sont définies par une médiane des courbes de ladite classe ou sur une sélection desdites courbes de ladite classe.

10. Méthode selon l'une des revendications 1 à 7, dans laquelle lesdites courbes représentatives d'une classe sont définies par rapport à un centre de gravité de la classe.

11. Méthode selon l'une des revendications précédentes, dans laquelle lesdites courbes représentatives d'une classe sont définies après un filtrage sur les facteurs principaux utilisés dans la classification.

## Patentansprüche

1. Methode zur Erschließung einer unterirdischen Lagerstätte, die von einem Computer implementiert wird, bei der man eine Darstellung der unterirdischen Lagerstätte anhand von Kurven erstellt, die eine Entwicklung einer Sättigung eines Fluids in Abhängigkeit von mindestens einer Eigenschaft P bezüglich der Strömung des Fluids in der Lagerstätte beschreiben, wobei die Eigenschaft P der Kapillardruck oder die relative Permeabilität ist, wobei die Kurven durch Laborversuche erhalten werden, die an aus der Lagerstätte entnommenen Proben durchgeführt werden, bei der man die Lagerstätte in eine Menge von Gitterzellen diskretisiert, wobei jede Gitterzelle der Menge von Gitterzellen einer Lithologie zugeordnet wird, wobei die Methode die folgenden Schritte umfasst:
- man führt eine Hauptkomponentenanalyse einer anhand der Kurven erstellten Datentabelle durch, so dass Hauptfaktoren extrahiert werden, welche die Daten erklären;
- man stellt die Kurven in einem anhand der Hauptfaktoren erstellten Darstellungsraum dar;
- man führt eine Klassifikation der in dem Darstellungsraum dargestellten Kurven mithilfe einer Methode zur überwachten Klassifikation durch, wobei die Trainingsinformation für die Methode zur überwachten Klassifikation der Lithologie der Proben entspricht, wobei jede aus der Klassifikation hervorgegangene Klasse einer Lithologie zugeordnet wird;
- man definiert mindestens eine Kurve, die für jede aus der Klassifikation hervorgegangene Klasse repräsentativ ist;
- man ordnet jeder Gitterzelle eine der repräsentativen Kurven in Abhängigkeit von der der Gitterzelle zugeordneten Lithologie zu;
- man definiert ein optimales Erschließungsschema für die Lagerstätte anhand der Darstellung der Lagerstätte und mittels eines Strömungssimulators; und
- man erschließt die Lagerstätte nach dem optimalen Erschließungsschema.

2. Methode nach Anspruch 1, bei der man die Datentabelle erstellt, indem die folgenden Schritte ausgeführt werden:
- man resampelt die Kurven mit einer regelmäßigen und den verschiedenen Kurven gemeinsamen Schrittweite;
- man erstellt die Tabelle, in der jede Zeile einem nach dem Resampling erhaltenen Wert der Eigenschaft P entspricht und in der jede Spalte einem entsprechenden Wert der an den resampelten Kurven beobachteten Sättigung entspricht.

3. Methode nach Anspruch 2, bei der man die Hauptkomponentenanalyse durchführt, indem man die Spalten als Variablen und die Zeilen als Beobachtungen verwendet.

4. Methode nach einem der vorhergehenden Ansprüche, bei der die Eigenschaft bezüglich der Strömung des Fluids der Kapillardruck oder die relative Permeabilität oder eine Leverett-Transformation des Kapillardrucks oder der relativen Permeabilität ist.

5. Methode nach einem der vorhergehenden Ansprüche, bei der man den Darstellungsraum mittels der folgenden Schritte erstellt:
i- man bestimmt eine Anzahl von Hauptfaktoren, die zur Charakterisierung einer Morphologie der Kurven beibehalten werden;
ii- man bestimmt einen Parameter, der die Kurven in Bezug auf die beibehaltenen Hauptfaktoren charakterisiert;
iii- man definiert Achsen des Darstellungsraums durch die Werte des Parameters.

6. Methode nach Anspruch 5, bei welcher der Parameter eine Korrelation zwischen den Kurven und den beibehaltenen Hauptfaktoren oder einen Beitrag der Kurven zu den beibehaltenen Hauptfaktoren darstellt.

7. Methode nach einem der vorhergehenden Ansprüche, bei der man die Klassifikation mittels eines Algorithmus durchführt, der unter den folgenden Methoden gewählt ist:
k-Means-Methode, nicht überwachte Methode durch neuronale Netze, nicht überwachte Methode durch Kohonen-Netz, hierarchische Klassifikationsmethode, überwachte Methode durch diskriminierende Analyse, überwachte Methode durch neuronales Netz.

8. Methode nach einem der vorhergehenden Ansprüche, bei der die eine Klasse repräsentierenden Kurven durch einen Mittelwert definiert werden, der über mindestens zwei Kurven berechnet wird, die einem Schwerpunkt der Klasse nächstgelegen sind.

9. Methode nach einem der Ansprüche 1 bis 7, bei der die eine Klasse repräsentierenden Kurven durch einen Medianwert der Kurven der Klasse oder über eine Selektion der Kurven der Klasse definiert werden.

10. Methode nach einem der Ansprüche 1 bis 7, bei der die eine Klasse repräsentierenden Kurven in Bezug auf einen Schwerpunkt der Klasse definiert werden.

11. Methode nach einem der vorhergehenden Ansprüche, bei der die eine Klasse repräsentierenden Kurven nach einer Filterung über die bei der Klassifikation verwendeten Hauptfaktoren definiert werden.

## Claims

1. Computer-implemented method for extracting an underground deposit, in which method a representation of said underground deposit is constructed, on the basis of curves describing a variation in a saturation of a fluid as a function of at least one property P relative to the flow of said fluid within said deposit, said property P being capillary pressure or relative permeability, said curves being obtained via laboratory experiments carried out on samples extracted from said deposit, and in which method said deposit is discretized into a set of cells, each cell of said set of cells being associated with one lithology, the method comprising the following steps:
- a principal component analysis is carried out on a data table constructed from said curves, so as to extract principal factors explaining said data;
- said curves are plotted in a representation space constructed from said principal factors;
- the curves plotted in the representation space are classified by means of a supervised classification method, the information used to train said supervised classification method corresponding to the lithology of said samples, each class obtained from said classification being associated with one lithology;
- at least one curve representative of each class obtained from said classification is defined;
- one of said representative curves is associated with each cell, depending on the lithology associated with the cell;
- a scheme for optimal extraction of said deposit is defined on the basis of said representation of said deposit and by means of a flow simulator; and
- said deposit is extracted according to said optimal extraction scheme.

2. Method according to Claim 1, wherein said data table is constructed by carrying out the following steps:
- said curves are resampled with a regular interval common to the various curves;
- said table is constructed, in which table each row corresponds to a value of said property P obtained after resampling, and in which table each column corresponds to a corresponding value of the saturation observed on said resampled curves.

3. Method according to Claim 2, wherein the principal component analysis is carried out using the columns as variables and the rows as observations.

4. Method according to one of the preceding claims, wherein said property relative to the flow of said fluid is capillary pressure or relative permeability or a Buckley-Leverett conversion of the capillary pressure or relative permeability.

5. Method according to one of the preceding claims, wherein said representation space is constructed by means of the following steps:
i- a number of principal factors to be conserved to characterize a morphology of said curves is determined;
ii- a parameter characterizing said curves with respect to said conserved principal factors is determined;
iii- axes of said representation space are defined using the values of said parameter.

6. Method according to Claim 5, wherein said parameter represents a correlation between said curves and the conserved principal factors, or a contribution of said curves to said conserved principal factors.

7. Method according to one of the preceding claims, wherein said classification is carried out by means of an algorithm chosen from the following methods: a K-means method, an unsupervised method using a neural network, an unsupervised method using a Kohonen network, a hierarchical classification method, a supervised method using discriminant analysis, a supervised method using a neural network.

8. Method according to one of the preceding claims, wherein said curves representative of a class are defined by a mean computed from at least two curves that are closest to a centre of gravity of the class.

9. Method according to one of Claims 1 to 7, wherein said curves representative of a class are defined by a median of the curves of said class or by a median of a selection of said curves of said class.

10. Method according to one of Claims 1 to 7, wherein said curves representative of a class are defined with respect to a centre of gravity of the class.

11. Method according to one of the preceding claims, wherein said curves representative of a class are defined after filtering the principal factors used in the classification.
